# EUROPÄISCHE PATENTSCHRIFT

(11) **EP 3 091 180 B1**
(45) Veröffentlichungstag und Bekanntmachung des Hinweises auf die Patenterteilung: **18.10.2017**
(21) Anmeldenummer: 16164843.1
(22) Anmeldetag: 12.04.2016
(51) Int. Cl.: F01D 5/14, F01D 9/04

(54) **LEITSCHAUFELSEGMENT MIT KONTURIERTER ENDWAND**
GUIDE VANE SEGMENT WITH CONTOURED ENDWALL
SEGMENT D'AUBE DIRECTRICE AVEC PAROI D'EXTRÉMITÉ PROFILÉE

(30) Priorität: 08.05.2015 DE 102015208572
(43) Veröffentlichungstag der Anmeldung: 09.11.2016
(73) Patentinhaber: MTU Aero Engines AG, 80995 München (DE)
(72) Erfinder: Kislinger, Bernd, 85276 Reisgang (DE); Hübner, Norbert, 85221 Dachau (DE)

(56) Entgegenhaltungen:
- EP-A1- 2 261 462
- EP-A2- 2 505 851
- WO-A1-2014/130332
- US-A1- 2009 162 193
- US-A1- 2013 004 315

## Beschreibung

Die vorliegende Erfindung betrifft ein Leitschaufelelement für eine Gasturbine, eine Leitschaufelelementanordnung mit zwei Leitschaufelelementen sowie eine Gasturbine mit dem Leitschaufelelement.

Aus betriebsinterner Praxis sind Leitschaufelelemente, insbesondere Leitschaufelcluster, mit einer sogenannten Ringraumkonturierung, d.h. einer Konturierung radial innerer und/oder äußerer die Leitschaufeln der Leitschaufelelemente verbindenden Bänder bekannt, um den Wirkungsgrad eines Leitgitters mit den Leitschaufelelementen zu verbessern.

Zur Abdichtung der Spalte zwischen einander in Umfangsrichtung gegenüberliegenden Stirnseiten benachbarter Leitschaufelelemente sind zudem Dichtelemente bekannt, die in Nuten in diesen Stirnseiten eingreifen. Leitschaufelelemente mit einer solchen Nut sind aus der US2009/162193A1, der WO2014/130332A1 sowie der US2013/004315A1 bekannt.

Weist die Ringraumkontur im Bereich einer solchem Nut eine lokale Vertiefung bzw. ein Tal auf, wird bisher die Wandstärke des Bandes in radialer Richtung von den Leitschaufeln weg insgesamt vergrößert, um eine ausreichende Restwandstärke des Bandes im Bereich des Grundes der lokalen Vertiefung vorzuhalten.

Dies erhöht nachteilig Gewicht und/oder radiale Bauhöhe.

Eine Aufgabe einer Ausführung der vorliegenden Erfindung ist es, eine Gasturbine zu verbessern.

Diese Aufgabe wird durch ein Leitschaufelelement mit den Merkmalen des Anspruchs 1 gelöst. Ansprüche 13, 15 stellen eine Leitschaufclelementanordnung bzw. eine Gasturbine mit dem Leitschaufelelement unter Schutz. Vorteilhafte Ausführungsformen der Erfindung sind Gegenstand der Unteransprüche.

Nach einem Aspekt der vorliegenden Erfindung weist ein Leitschaufelelement für eine Gasturbine, insbesondere ein Leitschaufelelement einer Gasturbine, eine erste Leitschaufel, eine in Umfangsrichtung um eine Teilung beabstandete zweite Leitschaufel und wenigstens ein diese Leitschaufeln verbindendes Band auf.

Das Band kann in einer Ausführung ein radial inneres Band sein. Gleichermaßen kann das Band in einer Ausführung ein radial äußeres Band sein. Weist das Leitschaufelelement in einer Ausführung ein radial inneres Band und ein radial äußeres Band auf, so können in einer Ausführung nur das radial innere Band, nur das radial äußere Band oder sowohl das radial innere Band als auch das radial äußere Band in der nachfolgend beschriebenen Weise ausgebildet sein.

Das bzw. wenigstens eines der Bänder weist eine schaufelseitige Oberfläche, ein radial inneres Band somit eine radial äußere Oberfläche, ein radial äußeres Band entsprechend eine radial innere Oberfläche, mit einer (Ringraum)Konturierung und eine erste Stirnseite in Umfangsrichtung mit einer Nut auf, in der ein Dichtungselement aufgenommen bzw. die hierzu vorgesehen bzw. eingerichtet ist.

Die Nut ist in einer Ausführung in Axial- und/oder Umfangsrichtung, wenigstens im Wesentlichen, gerade und/oder weist in Axial- und/oder Umfangsrichtung eine, wenigstens im Wesentlichen, konstante radiale Höhe auf.

Unter einer Konturierung wird vorliegend insbesondere ein in Umfangs- und/oder Axialrichtung variierender radialer Abstand der Oberfläche des Leitschaufelelements in (s)einer Einbaulage zu einer Rotationsachse der Gasturbine, insbesondere eine oder mehrere lokale Vertiefungen und/oder Erhöhungen gegenüber einer zylinderförmigen Bezugsfläche, verstanden.

Entsprechend weist die schaufelseitige Oberfläche bzw. Konturierung des radial inneren und/oder des radial äußeren Bandes zwischen der stirnseitennächsten ersten Leitschaufel und der Stirnseite eine erste lokale Vertiefung auf, die der Nut radial gegenüberliegt. Insbesondere kann eine Projektion der Nut in radialer Richtung teilweise oder vollständig innerhalb der ihr radial gegenüberliegenden (ersten lokalen) Vertiefung, insbesondere innerhalb ihres nachfolgend erläuterten Grundes, und/oder eine Projektion der der Nut radial gegenüberliegenden (ersten lokalen) Vertiefung, insbesondere wenigstens ihres nachfolgend erläuterten Grundes, in radialer Richtung teilweise oder vollständig innerhalb der Nut liegen. Mit anderen Worten überdecken Nut und die ihr radial gegenüberliegende (erste lokale) Vertiefung, insbesondere deren nachfolgend erläuterter Grund, einander in radialer Richtung gesehen wenigstens teilweise.

Die Oberfläche bzw. Konturierung weist zwischen der ersten und zweiten Leitschaufel eine zweite lokale Vertiefung auf, die von der ersten Vertiefung in Umfangsrichtung um die Teilung beabstandet ist und in Axialrichtung dieselbe Axialposition wie die erste Vertiefung aufweist.

Zwei Vertiefungen sind insbesondere im Sinne der vorliegenden Erfindung in Umfangsrichtung um die Teilung beabstandet, sofern ihr Abstand in Umfangsrichtung von der Teilung um höchstens 10%, insbesondere höchstens 5%, insbesondere höchstens 1%, insbesondere höchstens 0,1% abweicht. Entsprechend weisen zwei Vertiefungen im Sinne der vorliegenden Erfindung in Axialrichtung insbesondere dieselbe Axialposition auf, sofern ihr Abstand in Axialrichtung höchstens 10%, insbesondere höchstens 5%, insbesondere höchstens 1%, insbesondere höchstens 0,1%, einer, insbesondere minimalen, maximalen oder mittleren, axialen Breite des Bandes beträgt.

Ein Abstand zweier Vertiefungen in Umfangsrichtung kann insbesondere der Abstand der in Umfangsrichtung vordersten oder hintersten Schnittpunkte eines virtuellen bzw. Referenzzylinders, dessen Zylinderachse mit der Rotationsachse der Gasturbine fluchtet, mit den beiden Vertiefungen sein. Ein Abstand zweier Vertiefungen in Axialrichtung kann entsprechend insbesondere der Abstand der in Axialrichtung vordersten oder hintersten Schnittpunkte des virtuellen bzw. Referenzzylinders mit den beiden Vertiefungen sein. Mit anderen Worten wird zur Bestimmung eines Abstandes im Sinne der vorliegenden Erfindung, insbesondere in Hinblick auf die Beurteilung einer Beabstandung in Umfangsrichtung um die Teilung und/oder einer in Axialrichtung selben Axialposition, in einer Ausführung ein virtueller bzw. Referenzzylinder, dessen Zylinderachse mit der Rotationsachse der Gasturbine fluchtet, mit den beiden Vertiefungen (virtuell) geschnitten bzw. Höhenlinien der Vertiefungen auf derselben radialen Höhe ermittelt, auf diesen Schnittkurven bzw. Höhenlinien jeweils der in Umfangs- bzw. Axialrichtung vorderste oder hinterste Punkt ermittelt, und der Abstand dieser beiden vordersten oder hintersten Punkte voneinander in Umfangs- bzw. Axialrichtung als Abstand der beiden Vertiefungen ermittelt, wobei die radiale Höhe bzw. der Radius des Referenzzylinders insbesondere auf halber radialer Höhe der einen der beiden Vertiefungen, oder auf Höhe des Grundes einer der beiden Vertiefungen liegen kann.

Mit anderen Worten ist die zweite lokale Vertiefung gegenüber der ersten lokalen Vertiefung, wenigstens im Wesentlichen, (nur) um die Teilung versetzt und entspricht in einer Ausführung in Außenabmessung und/oder -rand, wenigstens im Wesentlichen, der ersten lokalen Vertiefung. Sofern die erste Vertiefung, insbesondere ihr Grund, an die Stirnseite angrenzt, mit anderen Worten durch diese "abgeschnitten" ist, entspricht in einer Ausführung der entsprechende Teil der zweiten lokalen Vertiefung der ersten lokalen Vertiefung in Außenabmessung und/oder -rand, wenigstens im Wesentlichen. Mit anderen Worten kann der Außenrand der ersten Vertiefung durch Versatz um die Teilung, wenigstens im Wesentlichen, mit dem Außenrand der zweiten Vertiefung bzw. einem entsprechenden Teilbereich hiervon in Deckung gebracht werden. Gemäß der Erfindung ist der, insbesondere ebene, Grund der ersten Vertiefung gegenüber einem, insbesondere zu den Leitschaufeln konkaven, Grund der zweiten Vertiefung in radialer Richtung zu den Leitschaufein hin versetzt.

Mit anderen Worten ist wenigstens eine erste lokale Vertiefung bzw. ein Tal einer, insbesondere periodischen, Ringraumkonturierung, die bzw. das der Nut radial gegenüberliegt, teilweise "aufgefüllt".

Hierdurch steht schaufelseitig im Bereich der Vertiefung mehr Material zur Verfügung, so dass die Nut gegenüber bisherigen Ausführungen in radialer Richtung zu den Leitschaufeln hin versetzt und so insbesondere vorteilhaft Gewicht und/oder radialer Bauraum reduziert werden können.

Nach einem Aspekt der vorliegenden Erfindung weist die erste Vertiefung einen, insbesondere ebenen, Grund auf, der mit der Nut einen Winkel einschließt, der höchstens ±15°, insbesondere höchstens ±10°, insbesondere höchstens ±5°, beträgt insbesondere wenigstens im Wesentlichen parallel zu der, insbesondere geraden, Nut ist.

Unter einem Grund einer lokalen Vertiefung wird vorliegend insbesondere derjenige Bereich der Vertiefung verstanden, der in radialer Richtung von den Leitschaufeln den größten Abstand aufweist, bei einer Vertiefung in einer radial äußeren Oberfläche eines radial inneren Bandes des Leitschaufelelements entsprechend der Bereich der Vertiefung, der in (s)einer Einbaulage in radialer Richtung einen minimalen Abstand zur Rotationsachse der Gasturbine aufweist, und bei einer Vertiefung in einer radial inneren Oberfläche eines radial äußeren Bandes des Leitschaufelelements entsprechend der Bereich der Vertiefung, der in (s)einer Einbaulage in radialer Richtung einen maximalen Abstand zur Rotationsachse der Gasturbine aufweist.

Die erste Vertiefung, insbesondere ihr Grund, grenzt in einer Ausführung an die (erste) Stirnseite an. Insbesondere kann somit eine Vertiefung einer Ringraumkonturierung gemeinsam durch die erste Vertiefung eines Leitschaufelelements und eine in Umfangsrichtung angrenzende lokale Vertiefung eines benachbarten Leitschaufelelements gebildet sein bzw. werden.

Gleichermaßen kann die erste Vertiefung, insbesondere ihr Grund, in einer anderen Ausführung von der (ersten) Stirnseite in Umfangsrichtung beabstandet sein. Insbesondere kann somit eine lokale Vertiefung einer Ringraumkonturierung alleine durch die erste Vertiefung eines Leitschaufelelements gebildet sein bzw. werden.

In einer Ausführung weist das Leitschaufelelement außer der ersten und zweiten Leitschaufel keine, eine oder wenigstens zwei weitere in Umfangsrichtung, insbesondere um die Teilung, beabstandete Leitschaufeln auf. In einer Ausführung weist das Leitschaufelelement außer der ersten und zweiten Leitschaufel höchstens 8, insbesondere höchstens 6, weitere in Umfangsrichtung, insbesondere um die Teilung, beabstandete Leitschaufeln auf.

In einer Ausführung weist die Oberfläche bzw. Konturierung zwischen der zweiten Leitschaufel und der dieser benachbarten (der) weiteren Leitschaufel(n) eine weitere lokale Vertiefung auf, die von der zweiten Vertiefung in Umfangsrichtung um die Teilung beabstandet ist, in Axialrichtung dieselbe Axialposition wie die zweite Vertiefung aufweist, und deren, insbesondere konkaver Grund in radialer Richtung gegenüber dem Grund der zweiten Vertiefung um höchstens 5%, insbesondere höchstens 1%, insbesondere höchstens 0,1%, einer, insbesondere minimalen, maximalen oder mittleren, radialen Wandstärke des Bandes, insbesondere im Bereich des Grundes, und/oder höchstens 1 mm, insbesondere um höchstens 0,1 mm, versetzt ist. Mit anderen Worten ist die weitere lokale Vertiefung gegenüber der zweiten lokalen Vertiefung, wenigstens im Wesentlichen, (nur) um die Teilung versetzt und entspricht in Abmessung und/oder Form, wenigstens im Wesentlichen, der zweiten lokalen Vertiefung.

In einer Weiterbildung ist die Konturierung mit der Teilung periodisch bzw. weist in Umfangsrichtung um die Teilung beabstandete lokale Vertiefungen und/oder Erhöhungen auf.

In einer Ausführung ist der Grund der ersten Vertiefung gegenüber dem Grund der zweiten Vertiefung in radialer Richtung um wenigstens 1%, insbesondere wenigstens 2%, insbesondere wenigstens 5%, einer, insbesondere minimalen, maximalen oder mittleren, radialen Wandstärke des Bandes, insbesondere im Bereich des Grundes, und/oder wenigstens 1 mm, insbesondere um wenigstens 2 mm, insbesondere um wenigstens 5 mm, versetzt.

In einer Ausführung weist die Oberfläche bzw. Konturierung zwischen der ersten Leitschaufel und der Stirnseite eine oder mehrere der Nut radial gegenüberliegende erste andere lokale Vertiefungen und zwischen der ersten und zweiten Leitschaufel (jeweils) eine zweite andere lokale Vertiefung auf, die von der ersten anderen Vertiefung in Umfangsrichtung um die Teilung beabstandet ist, und in Axialrichtung dieselbe Axialposition wie die erste andere Vertiefung aufweist, wobei die bzw. eine oder mehrere dieser erste(n) andere(n) Vertiefung(en) (jeweils) einen, insbesondere ebenen, Grund aufweist bzw. aufweisen, der gegenüber dem Grund der ersten Vertiefung in radialer Richtung nicht oder zu den Leitschaufeln hin versetzt ist. Mit anderen Worten kann die erste lokale Vertiefung eine radial tiefste Vertiefung sein, die der Nut radial gegenüberliegt bzw. deren Grund sich in radialer Richtung gesehen wenigstens teilweise mit der Nut überdeckt.

In einer Ausführung schließt der Grund der bzw. einer oder mehrere dieser ersten anderen Vertiefung(en) mit der Nut (jeweils) einen Winkel ein, der höchstens ±15°, insbesondere höchstens ±10°, insbesondere höchstens ±5°, beträgt, insbesondere wenigstens im Wesentlichen parallel zu der, insbesondere geraden, Nut ist.

Zusätzlich oder alternativ ist der, insbesondere ebene, Grund der bzw. einer oder mehrerer dieser ersten anderen Vertiefung(en) (jeweils) gegenüber einem, insbesondere zu den Leitschaufeln konkaven, Grund der anderen zweiten Vertiefung in radialer Richtung zu den Leitschaufeln hin versetzt.

Mit anderen Worten sind in einer Ausführung außer der ersten lokalen Vertiefung eine oder mehrere erste andere lokalen Vertiefungen, die, insbesondere deren Grund, der Nut radial gegenüberliegen, teilweise "aufgefüllt". In einer anderen Ausführung ist hingegen nur die (radial tiefste) erste lokale Vertiefung teilweise "aufgefüllt".

In einer Ausführung kann die Konturierung zwischen der ersten Leitschaufel und der Stirnseite eine oder mehrere weitere lokale Vertiefungen aufweisen, deren Grund sich mit der Nut in radialer Richtung gesehen nicht überdeckt, und/oder die tiefer sind als die erste Vertiefung.

In einer Ausführung sind eine oder mehrere der Vertiefungen, insbesondere also die erste lokale Vertiefung, die zweite lokale Vertiefung, eine oder mehrere erste andere lokale Vertiefungen und/oder eine oder mehrere zweite andere lokale Vertiefungen, von einer oder beiden Stirnseite in Axialrichtung des jeweiligen Bandes, das diese Vertiefung(en) aufweist, in Axialrichtung beabstandet. Zusätzlich oder alternativ sind in einer Ausführung eine oder mehrere der Vertiefungen, insbesondere also die erste lokale Vertiefung, die zweite lokale Vertiefung, eine oder mehrere erste andere lokale Vertiefungen und/oder eine oder mehrere zweite andere lokale Vertiefungen, von einer oder zwei in Umfangsrichtung benachbarten Leitschaufeln des Leitschaufelelements in Umfangsrichtung beabstandet.

In einer Ausführung beträgt eine, insbesondere minimale, maximale oder mittlere, Erstreckung einer der Vertiefungen oder ihres ebenen Grundes, insbesondere also der ersten lokalen Vertiefung, der zweiten lokalen Vertiefung, einer oder mehrerer erster anderer lokaler Vertiefungen und/oder einer oder mehrerer zweiter anderer lokaler Vertiefungen, in Axialrichtung wenigstens 5%, insbesondere wenigstens 10%, und/oder höchstens 75%, insbesondere höchstens 50%, insbesondere höchstens 25%, der, insbesondere minimalen, maximalen oder mittleren, axialen Breite des Bandes. Zusätzlich oder alternativ beträgt in einer Ausführung eine, insbesondere minimale, maximale oder mittlere, Erstreckung einer der Vertiefungen oder ihres ebenen Grundes, insbesondere also der ersten lokalen Vertiefung, der zweiten lokalen Vertiefung, einer oder mehrerer erster anderer lokaler Vertiefungen und/oder einer oder mehrerer zweiter anderer lokaler Vertiefungen, in Umfangsrichtung wenigstens 5%, insbesondere wenigstens 10%, und/oder höchstens 75%, insbesondere höchstens 50%, insbesondere höchstens 25%, der Teilung.

In einer Ausführung beträgt eine Fläche eines, insbesondere ebenen, Grundes wenigstens einer ersten Vertiefung wenigstens 1%, insbesondere wenigstens 2%, insbesondere wenigstens 5%, einer Fläche des Bandes zwischen der ersten und zweiten Leitschaufel, wobei die Fläche des Bandes zwischen der ersten und zweiten Leitschaufel im Sinne der vorliegenden Erfindung insbesondere die Fläche zwischen Skelett- bzw. Profil(mittel)linien der ersten und zweiten Leitschaufel sein kann. Zur Vereinfachung kann die Fläche des Bandes zwischen der ersten und zweiten Leitschaufel im Sinne der vorliegenden Erfindung in einer Ausführung durch das Produkt der Teilung mit der, insbesondere mittleren, maximalen oder minimalen, axialen Breite des Bandes ermittelt werden bzw. sein. Entsprechend beträgt in einer Ausführung eine Fläche eines, insbesondere ebenen, Grundes wenigstens einer ersten Vertiefung wenigstens 1%, insbesondere wenigstens 2%, insbesondere wenigstens 5%, eines Produkt der Teilung mit der, insbesondere mittleren, maximalen oder minimalen, axialen Breite des Bandes.

In einer Ausführung sind bzw. werden die Leitschaufeln und das diese Leitschaufeln verbindende radial innere Band und/oder das diese Leitschaufeln verbindende radial äußere Band integral miteinander hergestellt, insbesondere urgeformt, insbesondere gegossen, oder, insbesondere stoffschlüssig, miteinander verbunden, insbesondere verschweißt. Zusätzlich oder alternativ sind bzw. werden das Band oder die Bänder einteilig bzw. -stückig (hergestellt).

Nach einem Aspekt der vorliegenden Erfindung weist eine Leitschaufelelementanordnung ein (erstes) der hier beschriebenen Leitschaufelelemente und ein anderes Leitschaufelelement mit einer Stirnseite auf, die eine Nut aufweist und der ersten Stirnseite des einen (ersten) Leitschaufelelements in Umfangsrichtung gegenüberliegt, wobei ein Dichtungselement der Leitschaufelelementanordnung in die Nuten in diesen einander gegenüberliegenden Stirnseiten eingreift.

In einer Ausführung kann auch das andere Leitschaufelelement ein (zweites) der hier beschriebenen Leitschaufelelemente sein, seine der ersten Stirnseite des einen (ersten) Leitschaufelelementes gegenüberliegende Stirnseite seine erste Stirnseite. Gleichermaßen kann das andere Leitschaufelelement auch von einem hier beschriebenen Leitschaufelelement verschiedenes Leitschaufelelement sein.

Wie vorstehend bereits erläutert, kann somit eine Vertiefung einer Ringraumkonturierung gemeinsam durch die erste Vertiefung des einen (ersten) Leitschaufelelements und die erste Vertiefung des anderen (zweiten) Leitschaufelelements gebildet sein bzw. werden. Gleichermaßen kann eine lokale Vertiefung einer Ringraumkonturierung alleine durch die erste Vertiefung des einen (ersten) Leitschaufelelements gebildet sein bzw. werden.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Axialschnitt durch einen Teil einer Leitschaufelelementanordnung einer Gasturbine mit zwei Leitschaufelelementen nach einer Ausführung der vorliegenden Erfindung;
- Fig. 2: einen Teil eines Meridianschnitts längs der Linie II-II in Fig. 1; und
- Fig. 3: einen Teil eines Meridianschnitts längs der Linie III-III in Fig. 1.

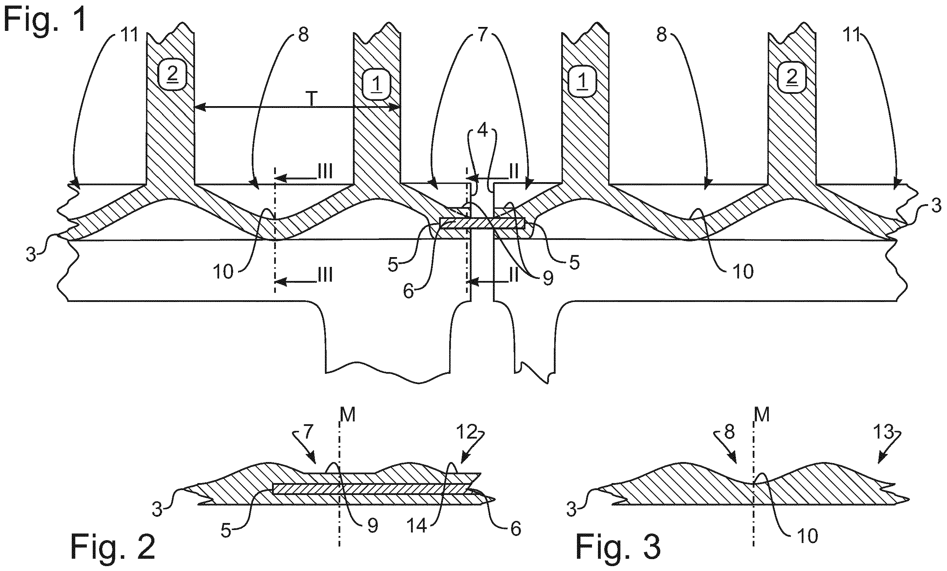

Fig. 1 zeigt einen Axialschnitt durch einen Teil einer Leitschaufelelementanordnung einer Gasturbine mit zwei Leitschaufelelementen nach einer Ausführung der vorliegenden Erfindung.

Die beiden Leitschaufelelemente sind identisch und werden daher nachfolgend gemeinsam beschrieben.

Sie weisen jeweils eine erste Leitschaufel 1, eine in Umfangsrichtung um eine Teilung T beabstandete zweite Leitschaufel 2 und ein diese Leitschaufeln 1, 2 jeweils verbindendes radial inneres Band 3 auf. Die Leitschaufeln können zusätzlich auch durch ein radial äußeres Band verbunden sein (nicht dargestellt), das zusätzlich zu dem oder anstelle des radial inneren Bands 3 in der nachfolgend beschriebenen Weise ausgebildet sein kann.

Die Bänder 3 weisen jeweils eine schaufelseitige Oberfläche (oben in Fig. 1) mit einer im Ausführungsbeispiel nur exemplarisch etwa sinusartigen Konturierung und eine erste Stirnseite 4 in Umfangsrichtung (horizontal in Fig. 1) mit einer Nut 5 auf, in der ein Dichtungselement 6 aufgenommen ist.

Die Nut 5 ist in Axialrichtung (senkrecht auf der Zeichenebene der Fig. 1) und in Umfangsrichtung gerade und weist in Axial- und Umfangsrichtung eine konstante radiale Höhe auf.

Die schaufelseitige Oberfläche bzw. Konturierung weist zwischen der stirnseitennächsten ersten Leitschaufel 1 und der Stirnseite 4 eine erste lokale Vertiefung 7 auf, die der Nut 5 radial (vertikal in Fig. 1) gegenüberliegt.

Sie weist weiter zwischen der ersten und zweiten Leitschaufel 1, 2 eine zweite lokale Vertiefung 8 auf, die von der ersten Vertiefung 7 in Umfangsrichtung um die Teilung T beabstandet ist und die in Umfangsrichtung gesehen mit der ersten Vertiefung 7 fluchtet, so dass sie in Axialrichtung dieselbe Axialposition wie die erste Vertiefung 7 aufweist. Dies ist insbesondere in der Zusammenschau der Fig. 2, 3 erkennbar, in der eine Mittelebene M des Leitschaufelelements senkrecht zur Drehachse der Gasturbine strichpunktiert angedeutet ist. Die zweite lokale Vertiefung 8 ist somit gegenüber der ersten lokalen Vertiefung 7 nur um die Teilung T versetzt, sie bzw. ein entsprechender Teil der zweiten lokalen Vertiefung 8 entspricht in Außenabmessung und -rand der ersten lokalen Vertiefung.

Die erste Vertiefung 7 weist einen ebenen Grund 9 auf, der parallel zu der Nut 5 ist.

Zusätzlich ist der ebene Grund 9 der ersten Vertiefung 7 gegenüber einem zu den Leitschaufeln 1, 2 konkaven Grund 10 der zweiten Vertiefung 8 in radialer Richtung zu den Leitschaufeln hin (nach oben in Fig. 1-3) versetzt, wie insbesondere in Fig. 1 sowie der Zusammenschau der Fig. 2, 3 erkennbar.

Mit anderen Worten ist die erste lokale Vertiefung 7 einer periodischen Ringraumkonturierung, die der Nut 5 radial gegenüberliegt, teilweise "aufgefüllt". Zur Verdeutlichung ist in Fig. 1 gestrichelt auch die ("unaufgefüllte"), der zweiten Vertiefung 8 entsprechende Oberfläche eingezeichnet.

Der Grund 9 der ersten Vertiefung 7 grenzt jeweils an die erste Stirnseite 4 an, so dass eine Vertiefung der Ringraumkonturierung der Leitschaufelelementanordnung gemeinsam durch die ersten Vertiefungen 7 der beiden Leitschaufelelemente gebildet ist.

Die Leitschaufelelemente können außer der ersten und zweiten Leitschaufel 1, 2 weitere in Umfangsrichtung um die Teilung T beabstandete Leitschaufeln aufweisen (nicht dargestellt).

Die Oberfläche bzw. Konturierung weist dann insbesondere zwischen der zweiten Leitschaufel 2 und der dieser benachbarten weiteren Leitschaufel eine weitere lokale Vertiefung 11 auf, die von der zweiten Vertiefung 8 in Umfangsrichtung um die Teilung T beabstandet ist und die in Umfangsrichtung gesehen mit der zweiten Vertiefung 8 fluchtet, und deren konkaver Grund in radialer Richtung auf gleicher Höhe liegt wie der Grund 10 der zweiten Vertiefung. Mit anderen Worten ist die weitere lokale Vertiefung 11 gegenüber der zweiten lokalen Vertiefung 8 nur um die Teilung T versetzt und entspricht in Abmessung und Form der zweiten lokalen Vertiefung 8.

Allgemein ist die Konturierung mit der Teilung T periodisch bzw. weist in Umfangsrichtung um die Teilung T beabstandete lokale Vertiefungen 7, 8, 11 und Erhöhungen auf.

Wie insbesondere im Schnitt der Fig. 2 erkennbar, weist die Oberfläche bzw. Konturierung zwischen der ersten Leitschaufel 1 und der Stirnseite 4 eine erste andere lokale Vertiefung 12 und zwischen der ersten und zweiten Leitschaufel 1, 2 eine hierzu um die Teilung T versetzte zweite andere lokale Vertiefung 13 auf.

Diese erste andere Vertiefung 12 weist ebenfalls einen ebenen Grund 14 auf, dieser ist gegenüber dem Grund 9 der ersten Vertiefung 7 in radialer Richtung nicht versetzt. Somit ist die erste lokale Vertiefung 7 (sowie auch die erste andere lokale Vertiefung 12, deren Grund 14 mit dem Grund 9 der ersten lokalen Vertiefung 7 auf derselben radialen Höhe liegt, jeweils) eine radial tiefste Vertiefung, die der Nut 5 gegenüberliegt.

Wie ebenfalls in Fig. 2 erkennbar, kann die Konturierung zwischen der ersten Leitschaufel 1 und der Stirnseite 4 weitere lokale Vertiefungen aufweisen, die tiefer sind als die erste Vertiefung 7, der Nut 5 jedoch nicht radial gegenüberliegen bzw. deren Grund sich mit der Nut 5 in radialer Richtung nicht überdeckt.

Auch der Grund 14 der ersten anderen Vertiefung 12 ist parallel zu der Nut 5 und gegenüber dem zu den Leitschaufeln konkaven Grund der anderen zweiten Vertiefung 13 in radialer Richtung zu den Leitschaufeln hin (nach oben in Fig. 2) versetzt.

Wie weiter in Fig. 2 erkennbar, ist die erste lokale Vertiefung 7 von beiden Stirnseite in Axialrichtung (links, rechts in Fig. 2) des Bandes 3 beabstandet.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: erste Leitschaufel
- 2: zweite Leitschaufel
- 3: radial inneres Band
- 4: axiale Stirnseite
- 5: Nut
- 6: Dichtungselement
- 7: erste Vertiefung
- 8: zweite Vertiefung
- 9, 10, 14: Grund
- 11: weitere Vertiefung
- 12: erste andere Vertiefung
- 13: zweite andere Vertiefung

- M: Mittelebene
- T: Teilung

## Patentansprüche

1. Leitschaufelelement für eine Gasturbine, mit einer ersten Leitschaufel (1), einer in Umfangsrichtung um eine Teilung (T) beabstandeten zweiten Leitschaufel (2) und wenigstens einem diese Leitschaufeln verbindenden Band (3), wobei wenigstens ein diese Leitschautein (1, 2) verbindendes Band (3) eine schaufetseitige Oberfläche mit einer Konturierung und eine erste Stirnseite (4) in Umfangsrichtung mit einer Nut (5) zur Aufnahme eines Dichtungselements (6) aufweist,
wobei die Konturierung zwischen der stirnseitennächsten ersten Leitschaufel (1) und der Stirnseite (4) eine der Nut (5) radial gegenüberliegende erste lokale Vertiefung (7) und zwischen der ersten und zweiten Leitschaufeln (1, 2) eine zweite lokale Vertiefung (8) aufweist, die von der ersten Vertiefung (7) in Umfangsrichtung um die Teilung (T) beabstandet ist und in Axialrichtung dieselbe Axialposition wie die erste Vertiefung (7) aufweist,
**dadurch gekennzeichnet, dass** die erste Vertiefung (7) einen Grund (9) aufweist, der gegenüber einem Grund (10) der zweiten Vertiefung (8) in radialer Richtung zu den Gleitschaufeln (1, 2) hin versetzt ist.

2. Leitschaufelelement nach dem vorhergehenden Anspruch, **dadurch gekennzeichnet, dass** die Nut (5) in Axialrichtung gerade ist und der Grund (9) der ersten Vertiefung (7) eben ist und mit der Nut (5) einen Winkel einschließt, der höchstens ±15° beträgt.

3. Leitschaufelelement nach dem vorhergehenden Anspruch, **dadurch gekennzeichnet, dass** die erste Vertiefung (7), insbesondere ihr Grund (9), an die Stirnseite (4) angrenzt oder von dieser in Umfangsrichtung beabstandet ist.

4. Leitschaufelelement nach einem der vorhergehenden Ansprüche, **dadurch gekennzeichnet, dass** es wenigstens eine und/oder höchstens 8 weitere in Umfangsrichtung, insbesondere um die Teilung, beabstandete Leitschaufeln aufweist.

5. Leitschaufelelement nach dem vorhergehenden Anspruch, **dadurch gekennzeichnet, dass** die Konturierung zwischen der zweiten Leitschaufeln und der dieser benachbarten weiteren Leitschaufel eine weitere lokale Vertiefung (11) aufweist, die von der zweiten Vertiefung (8) in Umtangsrichtung um die Teilung (T) beabstandet ist, in Axialrichtung dieselbe Axialposition wie die zweite Vertiefung (8) aufweist, und deren, insbesondere konkaver Grund in radialer Richtung gegenüber dem Grund (10) der zweiten Vertiefung (8) um höchstens 5% einer radialen Wandstärke des Bandes (3) und/oder höchstens 1 mm versetzt ist.

6. Leitschaufelelement nach einem der vorhergehenden Ansprüche, **dadurch gekennzeichnet, dass** der Grund (9) der ersten Vertiefung (7) gegenüber dem Grund (10) der zweiten Vertiefung (8) in radialer Richtung um wenigstens 1% einer radialen Wandstärke des Bandes (3) und/oder wenigstens 1. mm versetzt ist.

7. Leitschaufelelement nach einem der vorhergehenden Ansprüche, **dadurch gekennzeichnet, dass** die Konturierung zwischen der ersten Leitschaufel (1) und der Stirnseite (4) wenigstens eine der Nut (5) radial gegenüberliegende erste andere lokale Vertiefung (12) und zwischen der ersten und zweiten Leitschaufel (1,2) eine zweite andere lokale Vertiefung (13) aufweist, die von der ersten anderen Vertiefung (12) in Umfangsrichtung um die Teilung (T) beabstandet ist und in Axialrichtung dieselbe Axialposition wie die erste andere Vertiefung (12) aufweist, wobei die erste andere Vertiefung (12) einen, insbesondere ebenen, Grund (14) aufweist, der gegenüber dem Grund (9) der ersten Vertiefung (7) in radialer Richtung nicht oder zu den Leitschaufeln (1, 2) hin versetzt ist.

8. Leitschaufelelement nach dem vorhergehenden Anspruch, **dadurch gekennzeichnet, dass** der Grund (14) der ersten anderen Vertiefung (12) mit der Nut (5) einen Winkel einschließt, der höchstens ±15° beträgt, und/oder gegenüber einem, insbesondere konkaven, Grund der zweiten anderen Vertiefung (13) in radialer Richtung zu den Leitschaufeln (1, 2) hin versetzt ist.

9. Leitschaufelelement nach einem der vorhergehenden Ansprüche, **dadurch gekennzeichnet, dass** wenigstens eine der Vertiefungen (7, 8, 11, 12, 13) von wenigstens einer Stirnseite des Bandes (3) mit der Vertiefung in Axialrichtung und/oder wenigstens einer in Umfangsrichtung benachbarten Leitschaufeln (1, 2) des Leitschaufelelements beabstandet ist.

10. Leitschaufelelement nach einem der vorhergehenden Ansprüche, **dadurch gekennzeichnet, dass** eine Erstreckung wenigstens einer der Vertiefungen (7, 8, 11, 12, 13) oder ihres ebenen Grundes (9, 14) in Axialrichtung wenigstens 5% und/oder höchstens 75% der axialen Breite des Bandes (3) und/oder in Umfangsrichtung wenigstens 5% und/oder höchstens 75% der Teilung (T) beträgt.

11. Leitschaufelelement nach einem der vorhergehenden Ansprüche, **dadurch gekennzeichnet, dass** eine Fläche eines, insbesondere ebenen, Grundes (9, 14) einer ersten Vertiefung (7, 12) wenigstens 1% einer Fläche des Bandes (3) zwischen der ersten und zweiten Leitschaufel beträgt.

12. Leitschaufelelement nach einem der vorhergehenden Ansprüche, **dadurch gekennzeichnet, dass** die Leitschaufeln (1, 2) und das wenigstens eine diese Leitschaufeln verbindende Band (3) integral miteinander hergestellt, insbesondere urgeformt, oder, insbesondere stoffschlüssig, miteinander verbunden sind.

13. Leitschaufelelementanordnung mit zwei Leitschaufelelementen, eins davon nach einem der vorhergehenden Ansprüche, wobei die erste Stirnseite (4) des einen Leitschaufelelementes nach einem der vorhergehenden Ansprüche einer eine Nut (5) aufweisenden Stirnseite (4) des anderen Leitschaufelelementes in Umfangsrichtung gegenüberliegt und ein Dichtungselement (6) in die Nuten (5) in diesen einander gegenüberliegenden Stirnseiten (4) eingreift.

14. Leitschaufelelementanordnung nach dem vorhergehenden Anspruch, wobei das andere Leitschaufelelement ebenfalls ein Leitschaufelelement nach einem der vorhergehenden Ansprüche und seine der ersten Stirnseite (4) des einen Leitschaufelelementes gegenüberliegende Stirnseite seine erste Stirnseite (4) ist.

15. Gasturbine, insbesondere Flugtriebwerk-Gasturbine, mit wenigstens einem Leitschaufelelement nach cinem der vorhergehenden Ansprüche, insbesondere einer Leitschaufelelementanordnung nach einem der vorhergehenden Ansprüche,

## Claims

1. A guide vane element for a gas turbine having a first guide vane (1), a second guide vane (2) distanced by one division (T) in the peripheral direction, and at least one band (3) joining these guide vanes, wherein at least one band (3) joining these guide vanes (1, 2) has a vane-side surface with a contouring and a first front side (4) in the peripheral direction having a groove (5) for the uptake of a sealing element (6),
wherein the contouring has a first local depression (7) lying radially opposite to the groove (5) between the first guide vane (1) next to the front side and the front side (4), and a second local depression (8) between the first and second guide vanes (1, 2), the second depression being distanced from the first depression (7) by the division (T) in the peripheral direction and having aubstantially the same axial position as the first depression (7) in the axial direction,
**characterized in that** the first depression (7) has a base (9) which is offset in the radial direction relative to the guide vanes (1, 2), when compared with a base (10) of the second depression (8).

2. The guide vane element according to the preceding claim, **characterized in that** the groove (5) is straight in the axial direction, and the base (9) of the first depression (7) is planar and, with the groove (5), encloses an angle that is at most ± 15°.

3. The guide vane element according to the preceding claim, **characterized in that** the first depression (7). in particular, the base (9) thereof, bounds the front side (4) or is distanced therefrom in the peripheral direction.

4. The guide vane element according to any of the preceding claims, **characterized by** comprising at least one and/or at most eight other guide vanes that are distanced, in particular, by the division in the peripheral direction.

5. The guide vane element according to the preceding claim, **characterized in that** the contouring between the second guide vane and the additional guide vane adjacent thereto has another local depression (11) that is distanced by the division (T) from the second depression (8) in the peripheral direction, has the same axial position as the second depression (8) in the axial direction, and has a base, which is, in particular, concave, and is offset in the radial direction when compared to the base (10) of the second depression (8) by at most 5% of a radial wall thickness of the band (3), and/or at most 1 mm.

6. The guide vane element according to any of the preceding claims, **characterized in that** the base (9) of the first depression (7), when compared to the base (10) of the second depression (8), is offset in the radial direction by at least 1 % of a radial wall thickness of the band (3), and/or at least 1 mm.

7. The guide vane element according to any of the preceding claims, **characterized in that** the contouring between the first guide vane (1) and the front side (4) has at least one first other local depression (12) lying radially opposite the groove (5), and has second other local depression (13) between the first and second guide vanes (1, 2), this second depression (13) being distanced from the first other depression (12) by the division (T) in the peripheral direction, and having the same axial position as the other first depression (12) in the axial direction, wherein the first other depression (12) has a base (14), which is, in particular, planar, and which, when compared to the base (9) of the first depression (7), is not offset in the radial direction, or relative to the guide vanes (1, 2).

8. The guide vane element according to the preceding claim, **characterized in that** the base (14) of the first other depression (12) encloses an angle that amounts to at most ±15° with the groove (5), and/or when compared to a, in particular, concave base of the second other depression (13) is offset in the radial direction relative to the guide vanes (1, 2).

9. The guide vane element according to any of the preceding claims, **characterized in that** at least one of the depressions (7, 8, 11, 12, 13) is distanced from at least one front side of the band (3) having the depression in the axial direction and/or at least one adjacent guide vane (1, 2) of the guide vane element in the peripheral direction.

10. The guide vane element according to any of the preceding claims, **characterized in that** an extent of at least one of the depressions (7, 8, 11, 12, 13) or the planar base (9, 14) thereof in the axial direction amounts to at least 5% and/or at most 75% of the axial width of the band (3), and/or in the peripheral direction amounts to at least 5% and/or at most 75% of the division (T).

11. The guide vane element according to any of the preceding claims, **characterized in that** a surface of a, in particular, planar base (9, 14) of a first depression (7, 12) amounts to at least 1% of a surface of the band (3) between the first and second guide vanes.

12. The guide vane element according to any of the preceding claims, **characterized in that** the guide vanes (1, 2) and the at least one band (3) joining these guide vanes are manufactured integrally with one another, in particular, are pre-formed, or are joined together cohesively.

13. A guide vane element arrangement having two guide vane elements, of thereof being according to any of the preceding claims, wherein the first front side (4) of the one guide vane element according to any of the preceding claims lies opposite in the peripheral direction from a front side (4) of the other guide vane element that has a groove (5), and a sealing element (6) engages in the grooves (5) in these front sides (4) that lie opposite one another.

14. The guide vane element arrangement according to the preceding claim, wherein the other guide vane element is also a guide vane element according to any of the preceding claims, and the front side thereof that lies opposite the first front side (4) of the one guide vane element is the first front side (4) thereof.

15. A gas turbine, in particular, an aircraft engine gas turbine, having at least one guide vane element according to any of the preceding claims, in particular, a guide vane element arrangement according to any of the preceding claims.

## Revendications

1. Elément d'aubes directrices pour turbine à gaz avec une première aube directrice (1), une deuxième aube directrice (2) distante d'un pas (T) dans la direction périphérique et au moins un bandage (3) reliant ces aubes directrices, dans lequel au moins un bandage (3) reliant ces aubes directrices (1, 2) présente une surface côté aube avec un contour et un premier côté d'attaque (4) avec une rainure (5) pour recevoir un élément d'étanchéité (6),
dans lequel le contour entre la première aube directrice (1) la plus proche du côté d'attaque et le côté d'attaque (4) présente une première cavité locale (7) radialement opposée à la rainure (5) et entre la première et la deuxième aube directrice (1, 2) une seconde cavité locale (8) qui est distante de la première cavité (7) du pas (T) dans la direction périphérique et, dans la direction axiale, la même position axiale que la première cavité (7),
**caractérisé en ce que** la première cavité (7) présente une base (9) qui est décalée vis-à-vis d'une base (10) de la seconde cavité (8) dans la direction radiale vers les aubes directrices (1, 2).

2. Elément d'aubes directrices selon la revendication précédente, **caractérisé en ce que** la rainure (5) est rectiligne dans la direction axiale et la base (9) de la première cavité est plane et inscrit avec la rainure (5) un angle qui atteint au maximum ±15°.

3. Elément d'aubes directrices selon la revendication précédente, **caractérisé en ce que** la première cavité (7), en particulier sa base (9), est délimitée sur le côté d'attaque (4) ou est distante de celui-ci dans la direction périphérique.

4. Elément d'aubes directrices selon l'une quelconque des revendications précédentes, **caractérisé en ce qu'**il présente au moins une aube directrice et/ou au maximum 8 autres aubes directrices distantes dans la direction périphérique en particulier du pas.

5. Elément d'aubes directrices selon la revendication précédente, **caractérisé en ce que** le contour entre la deuxième aube directrice et l'autre aube directrice qui lui est voisine présente une autre cavité locale (11) qui est distante de la seconde cavité (8) dans la direction périphérique du pas (T), présente dans la direction axiale la même position axiale que la seconde cavité (8) et sa base en particulier concave est décalée dans la direction radiale vis-à-vis de la base (10) de la seconde cavité (8) au maximum de 5 % d'une épaisseur de paroi radiale du bandage (3) et/ou au maximum de 1 mm.

6. Elément d'aubes directrices selon l'une quelconque des revendications précédentes, **caractérisé en ce que** la base (9) de la première cavité (7) est décalée vis-à-vis de la base (10) de la seconde cavité (8) dans la direction radiale d'au moins 1 % d'une épaisseur de paroi radiale du bandage (3) et/ou au moins de 1 mm.

7. Elément d'aubes directrices selon l'une quelconque des revendications précédentes, **caractérisé en ce que** le contour entre la première aube directrice (1) et le côté d'attaque (4) présente au moins une première autre cavité locale (12) radialement opposée à la rainure (5) et entre la première et la deuxième aube directrice (1, 2) une seconde autre cavité locale (13), qui est distante de la première autre cavité (12) du pas (T) dans la direction périphérique et dans la direction axiale la même position axiale que la première autre cavité (12), dans lequel la première autre cavité (12) présente une base (14) en particulier plane, qui n'est pas décalée vis-à-vis de la base (9) de la première cavité (7) dans la direction radiale ou est décalée vers les aubes directrices (1, 2).

8. Elément d'aubes directrices selon la revendication précédente, **caractérisé en ce que** la base (14) de la première autre cavité (12) inclut avec la rainure (5) un angle qui atteint au maximum ± 15° et/ou est décalée vis-à-vis d'une base en particulier concave de la seconde autre cavité (13) dans la direction radiale vers les aubes directrices (1, 2).

9. Elément d'aubes directrices selon l'une quelconque des revendications précédentes, **caractérisé en ce qu'**au moins l'une des cavités (7, 8, 11, 12, 13) d'au moins un côté d'attaque du bandage (3) est distante de la cavité dans la direction axiale et/ou d'au moins une aube directrice (1, 2), voisine dans la direction périphérique, de l'élément d'aubes directrices.

10. Elément d'aubes directrices selon l'une quelconque des revendications précédentes, **caractérisé en ce que** l'extension d'au moins l'une des cavités (7, 8, 11, 12, 13) ou de sa base plane (9, 14) dans la direction axiale atteint au moins 5 % et/ou au maximum 75 % de la largeur axiale du bandage (3) et/ou dans la direction périphérique au moins 5 % et/ou au maximum 75 % du pas (T).

11. Elément d'aubes directrices selon l'une quelconque des revendications précédentes, **caractérisé en ce qu'**une surface d'une base (9, 14) en particulier plane d'une première cavité (7,12) atteint au moins 1 % d'une surface du bandage (3) entre la première et la deuxième aube directrice.

12. Elément d'aubes directrices selon l'une quelconque des revendications précédentes, **caractérisé en ce que** les aubes directrices (1, 2) et le au moins un bandage (3) reliant ces aubes directrices sont fabriqués d'un seul tenant l'un avec l'autre, en particulier initialement formés, ou sont reliés l'un à l'autre en particulier de manière venue de matière.

13. Agencement d'éléments d'aubes directrices avec deux éléments d'aubes directrices, dont une selon l'une quelconque des revendications précédentes, dans lequel le premier côté d'attaque (4) du premier élément d'aubes directrices selon l'une quelconque des revendications précédentes est opposé à un côté d'attaque (4), présentant une rainure (5), de l'autre élément d'aubes directrices dans la direction périphérique et un élément d'étanchéité (6) s'engage dans les rainures (5) de ces côtés d'attaque (4) opposés l'une à l'autre.

14. Agencement d'éléments d'autres directrices selon la revendication précédente, dans lequel l'autre élément d'aubes directrices est également un élément d'aubes directrices selon l'une quelconque des revendications précédentes et son côté d'attaque opposé au premier côté d'attaque (4) du premier élément d'aubes directrices est son premier côté d'attaque (4).

15. Turbine à gaz, en particulier turbine à gaz de groupe motopropulseur comportant au moins un élément d'aubes directrices selon l'une quelconque des revendications précédentes, en particulier d'un agencement d'éléments d'aubes directrices selon l'une quelconque des revendications précédentes.
